# EUROPEAN PATENT APPLICATION

(11) **EP 3 306 948 A1**
(43) Date of publication of application: **11.04.2018**
(21) Application number: 16192864.3
(22) Date of filing: 07.10.2016
(51) Int. Cl.: H04N 21/81, H04N 21/44, H04N 21/4402

(54) **METHOD AND SYSTEM FOR DISPLAYING THE CONTENT OF A VIDEO OR AUDIO BROADCAST SIGNAL TO A USER AND METHOD AND SYSTEM FOR STORING TIMESTAMPS IN A DATABASE**

(71) Applicant: HURRA Communications GmbH, 70599 Stuttgart (DE)
(72) Inventor: René Schweier, 70599 Stuttgart (DE)
(74) Representative: Herrmann, Jochen

(57) **Abstract**

The invention refers to a method for displaying the content of a video or audio broadcast signal (18) to a user (4), the method comprising two subsequently executed parts:
- a first part executed in a first processing system (6) before actually displaying the content of the broadcast signal (18) to the user (4), the first part being adapted to detect a beginning and an end of segments of the broadcast signal (18) having a predefined content, and to store (22) timestamps (24) in a first database (26) representative of the time on the timeline at the detected beginning ('timestamp_{B}') and end ('timestamp_{E}') of the segments of the broadcast signal (18), and
- a second part executed in a second processing system (8) for actually displaying the content of the previously processed broadcast signal (18) to the user (4), the second part being adapted tocompare (38) in real-time a current time ('time') on the timeline with the timestamps (24) previously stored in the first database (26), and when the current time ('time') corresponds to a timestamp (24; 'timestamp_{B}') representative of the beginning of a segment of the broadcast signal (18), to skip the segment during display of the content of the received broadcast signal (18) by setting (38c) the current time ('time') on the timeline to the corresponding timestamp (24; 'timestamp_{E}') representative of the end of said segment, and to repeat the previous step until the end of the received broadcast signal (18) has been reached or the user (4) stops display of the content of the received broadcast signal (18).

## Description

The present invention refers to a method and system for displaying the content of a video or audio broadcast signal to a user. The invention further refers to a method and system for storing timestamps in a first database. The idea is to use the previously stored timestamps in a subsequently executed method for displaying the content of a video or audio broadcast signal to a user.

In the prior art audio or video broadcast signals are transmitted via cable, satellites or conventional ground based terrestrial antennas. They are received by appropriate reception devices, e.g. DVB-C (for cable), DVB-S (for satellite) or DVB-T (for terrestrial) receivers, processed in these receivers and the content of the broadcast signals is displayed to a user on a video and/or audio output device. The video and/or audio output device can be a television set (e.g. an LED-, LCD- or a Plasma-TV) or a computer monitor (e.g. an LED- or LCD-monitor), provided that the computer connected to the monitor is equipped with an appropriate reception device for the broadcast signals. The reception device can form part of a separate set-top box or can form an integral part of the video and/or audio output device. The reception device can be further provided with additional hard- and software for realizing additional functionalities, e.g. storing a received broadcast signal on a storage device (a hard disk, a solid state disk, a USB-flash drive or others).

Alternatively, the broadcast signal can be transmitted to a client (e.g. a PC, a Laptop, a Smartphone) via the Internet (cable or wireless) and displayed to a user on a monitor associated with the client by means of a browser. The broadcast signal can be downloaded to the computer in its entirety, stored there and displayed to the user only after the entire broadcast signal has been downloaded. More commonly, broadcast signals are transmitted to the computer and displayed to the user in a streaming process. In general and very broadly speaking, streaming refers to multimedia that is constantly received by the client over the Internet and presented to the user while being delivered by a provider. In order to compensate variations in the transmission rate over the Internet, the client usually has a buffer storage, which on an input side is fed with the broadcast signal stream, and on the output side the previously stored broadcast signal stream is extracted and the content displayed to the user (so-called FIFO buffer). Depending on the size of the buffer storage, only a relatively small part of the broadcast signal is stored therein at one time. The size of the part stored therein at a certain point in time varies depending on the transmission rate.

The above explanations apply for audio broadcast signals and for pure video broadcast signals just the same as for combined audio and video broadcast signals.

It is further known that the transmitted broadcast signals comprise very miscellaneous content, in particular some segments with advertisement, program previews of the provider of the broadcast signal, sexually explicit content and/or violent content. Of course, many other types or categories of content can make part of the broadcast signal and be detected during processing of the broadcast signal. For whatever reason it may be desired by the user himself or by third parties, e.g. the user's parents or legal guardians, that certain segments of the broadcast signal are not displayed to the user. For example, an adult user may want to watch a movie without interruptions by advertisements or program previews. Further, parents may want their child to watch a movie without certain sexually explicit content and/or without violent content. Therefore, it is an object of the invention to provide for an easy and effective way of selectively displaying the content of a broadcast signal to a user thereby omitting certain segments of the broadcast signal having a predefined content and not displaying them to the user.

In this respect there already exists a computer software for Windows® PCs called "Film//Riss" and provided by an Open Source community called Source-Forge (https://sourceforge.net/projects/filmriss/). This software allows video editing including cutting out commercials from a previously stored broadcast signal. It requires an input file which corresponds to the previously stored broadcast signal. During processing of the input video file, the software generates a plurality of separate output video files, each corresponding to a section of the broadcast signal between two commercials. At the end of processing, the separate output video files are merged together to form a single output video file which should have no more commercials and which can be displayed to a user on a monitor connected to the PC. The disadvantage of this software is that it works off-line and processing of the broadcast signal is not effected in real-time (simultaneously with receiving and displaying the broadcast signal to the user). In particular, it is not possible for a user to select a desired broadcast signal and to immediately start watching the content of the selected broadcast signal without commercials. Before the user can watch the content of the selected broadcast signal without commercials, the entire input video file corresponding to the selected broadcast signal has to be processed which may take some time. Furthermore, the software is limited to cutting out commercials. Segments of the broadcast signal containing a different type of predefined content cannot be cut out with this software.

Furthermore, a computer software for PC for burning CDs and DVDs called Nero® 9 provided by a company called Nero AG from Karlsruhe, Germany is known in the prior art. Part of this software is a program called "Ad-Spotter" which permits detection of commercials in a broadcast signal. This program requires an input video file which corresponds to the previously stored broadcast signal. During processing of the input video file, the software analyses the broadcast signal thereby detecting and marking the beginning and the end of segments containing commercials. If desired by the user the detected segments can be cut out from the broadcast signal. The reduced broadcast signal without the detected commercial segments is stored in an output video file which can be displayed to a user on a monitor connected to the PC. Again, the disadvantage of this software is that it works only off-line and that processing of the broadcast signal is not effected in real-time. In particular, it is not possible for a user to select a desired broadcast signal and to immediately start watching the content of the selected broadcast signal without commercials. Before the user can watch the content of the selected broadcast signal without commercials, the entire input video file corresponding to the selected broadcast signal has to be processed which may take some time. Further, processing of the video broadcast signal requires an interaction of the user for cutting the detected commercial segments out from the broadcast signal. Furthermore, the software is limited to cutting out commercials. Segments of the broadcast signal containing another type of predefined content cannot be cut out with this software.

Considering the known prior art it is an object of the present invention to provide for an easy and effective way of selectively displaying the content of a broadcast signal to a user thereby omitting display of certain segments of the broadcast signal having any type of predefined content and working automatically without the need for a user interaction during run-time.

According to the present invention a method for displaying the content of a video or audio broadcast signal to a user is proposed, the method comprising two subsequently executed parts:
- a first part executed in a first processing system before actually displaying the content of the broadcast signal to the user, the first part comprising the steps of:
   - receiving the broadcast signal along a timeline,
   - processing the received broadcast signal, comprising detecting a beginning and an end of segments of the broadcast signal having a predefined content, and
   - storing timestamps in a first database representative of the time on the timeline at the detected beginning and end of the segments of the broadcast signal, and
- a second part executed in a second processing system for actually displaying the content of the previously processed broadcast signal to the user, the second part comprising the steps of:
   - receiving said broadcast signal along a timeline,
   - displaying to a user the content of the received broadcast signal on a video and/or audio output device,
   - comparing in real-time a current time on the timeline with the timestamps previously stored in the first database, and when the current time corresponds to a timestamp representative of the beginning of a segment of the broadcast signal, skipping the segment during display of the content of the received broadcast signal by setting the current time on the timeline to the corresponding timestamp representative of the end of said segment, and
   - repeating the previous step until the end of the received broadcast signal has been reached or the user stops display of the content of the received broadcast signal.

The two parts of the claimed method constitute the present invention, either each part for itself as claimed in claims 10 and 12 or in combination with one another as claimed in claim 1. Accordingly, respective processing systems for realizing the methods according to claims 10 and 12 also constitute the present invention. The respective processing systems are claimed in claims 13 and 14.

The first part of the method according to claim 1 and the method according to claim 9, respectively, are executed off-line in a first processing system before actually displaying the content of the broadcast signal to the user, which is subsequently effected in the second part of the method according to claim 1 and the method according to claim 11, respectively. The first processing system for executing the first part of the method according to claim 1 can comprise an Internet server being connected and having access to at least a first database and possibly also to a second database. The databases can make part of the server, e.g. realized on a hard disk or a solid state disk of the server, or they can be realized separately from the server, e.g. as external storage devices or as separate Internet servers equipped with or having access to storage devices.

The processing system analyses a broadcast signal, which may be received via a conventional terrestrial antenna, a broadcast satellite or a broadcast cable from a provider, e.g. a television or radio station. To this end, the processing system is equipped with appropriate receiving means, such as a DVB-T receiver for receiving a terrestrial broadcast signal, a DVB-S receiver for receiving a satellite broadcast signal or a DVB-C receiver for receiving a cable broadcast signal. Of course, other sources and standards can also be used for receiving the broadcast signal. If the broadcast signal has previously been stored in a second database, receiving of the broadcast signal may comprise downloading the broadcast signal from the second database via the Internet. Loading of the signal may mean loading the entire signal into the processing system before starting processing and displaying of the broadcast signal. Alternatively, loading the broadcast signal could make part of a streaming process, as previously described, where only a small part of the broadcast signal is loaded at a time, possibly stored in a buffer and then displayed to the user almost simultaneously to receiving the signal. Storing the broadcast signal in the second database may be effected by the provider of the broadcast signal or any third party entity operating an online video recorder for storing selected TV-programs in a storage device or the Cloud (e.g. http://www.save.tv operated by save.TV Ltd. from Leipzig, Germany). The third party entity may offer for sale or subscription the service allowing users to download or stream previously stored TV-programs from the second database to the first processing system.

If the broadcast signal has not been previously stored in the second database, the received broadcast signal may be stored by the processing unit in the second database for future download or streaming (for example during the second part of the method according to claim 1). The step of storing the received broadcast signal is preferably executed prior to the step of processing the received broadcast signal in the first part of the method. Of course, the processed broadcast signal could also be stored in the second database almost simultaneously with or even after the step of processing the broadcast signal.

The broadcast signal is received along a timeline, which means that at the beginning of the broadcast signal a time counter is set to a predefined starting value, e.g. zero, and continues to count up or down as receiving of the broadcast signal goes along. A certain time value of the counter corresponds to a unique point in the broadcast signal.

The first processing system analyses or processes the received broadcast signal in order to detect a beginning and an end of certain segments of the broadcast signal having a predefined content. The type(s) of content to be detected in the broadcast signal may be, for example, an advertising content, a sexually explicit content, a violent content, any officially indexed content and/or any content deemed to be offensive for reasons of race and/or religion. The processing system generates timestamps representative of the time on the timeline at the detected beginning and end of the segments of the broadcast signal having the predefined content. Of course, the processing system can be designed to detect segments of more than one content type. In that case the processing system would generate different timestamps assigned to the respective types of content. The various detected segments with different types of contents could also overlap at least partially. The timestamps are stored in the first database. If timestamps assigned to different types of content are generated, then the timestamps stored in the first database are assigned to the respective type of content. For example, some timestamps would be assigned to advertising content and other timestamps would be assigned to some officially indexed content. The received broadcast signal and the timestamps can be stored in the same database (first and second database are a single integral database) or in different databases (first and second database are two separate databases).

Processing of the received broadcast signal in order to detect a beginning and an end of the segments with the predefined content within the broadcast signal is preferably performed in real-time. In the realm of the present description this means that processing is performed almost simultaneously with receiving the broadcast signal. The processing is performed almost simultaneously because during reception the broadcast signal max be partly stored in a buffer (during a streaming process) which may result in a short time delay between reception and processing of the signal. Other aspects may also lead to a short delay.

So after the first processing system has finished its work, there are a plurality of timestamps representative of the time on the timeline at the detected beginning and end of the segments of the broadcast signal having one or more predefined contents stored in the first database. These timestamps are used later on during actually displaying the content of the broadcast signal to a user (corresponding to the second part of the method according to claim 1 and the method according to claim 11, respectively), which will be described in more detail hereinafter.

Preferably, processing of the broadcast signal in the first part of the method according to claim 1, in particular detecting the beginning and the end of segments of the broadcast signal, comprises the steps of
- comparing a video or an audio fingerprint at least of part of the processed broadcast signal with video or audio fingerprints of segments of other video or audio signals having predefined contents, the fingerprints of the segments of the other video or audio signals having previously been stored in a third database, and
- upon detection of a match of the fingerprint of the processed broadcast signal with one of the stored fingerprints of the segments of the other video or audio signals, determining the time along the timeline of the beginning of the match as the beginning of the detected segment of the processed broadcast signal and the time along the timeline of the end of the match as the end of the detected segment of the processed broadcast signal.

Fingerprinting is a technique in which software identifies, extracts, and then compresses characteristic components of a video and/or audio content, enabling that content to be uniquely identified by its resultant fingerprint. Fingerprinting has proven itself to be highly effective at identifying and comparing digital video and/or audio data contained in broadcast signals. Fingerprinting analysis may be based on any number of visual video and/or acoustic audio features including, but not limited to, key frame analysis, colour, and motion changes during a video and/or audio sequence. The fingerprints of various segments having predefined contents can be generated off-line before the broadcast signal is analysed and then stored in the third database, to which the processing system is connected and has access to. The third database can make part of the processing system (e.g. the server) and can be realized, e.g. on a hard disk or a solid state disk of the server, or it can be realized separately from the processing system, e.g. as an external storage device or as a separate Internet server equipped with or having access to a storage device.

The second part of the method according to claim 1 and the method according to claim 11, respectively, are executed in a respective second processing system and refer to actually displaying the content of the broadcast signal to the user. The processing system for executing the second part of the method according to claim 1 can comprise an Internet server being connected and having access to at least the first database. The first database can make part of the server, e.g. realized on a hard disk or a solid state disk of the server, or it can be realized separately from the server, e.g. as external storage devices or as separate Internet servers equipped with or having access to storage devices. The first processing system for executing the first part of the method according to claim 1 and the second processing system for executing the second part of the method according to claim 1 can be a single integrated system or can be two separate processing systems.

The second processing system for executing the second part of the method according to claim 1 is connected to and has access to the first database with the previously generated timestamps stored therein, the timestamps representative of a beginning and an end of previously detected segments of the received broadcast signal having a predefined content. The system is further connected to a video and/or audio output device for displaying to the user the content of the received broadcast signal. Displaying the content of the broadcast signal in the realm of the present description means that the content of the broadcast signal is outputted to the user in any possible way. The output device can provide for a mere audio output in the case of an audio broadcast signal, for a mere video output in the case of a video broadcast signal or for a combined audio and video output in the case of a combined video and audio broadcast signal. In the first case, the output device may comprise processing means for converting the audio broadcast signal into the corresponding acoustic signals, an amplifier and one or more loudspeakers. In the last case, the output device may additionally comprise processing means for converting the video broadcast signal into the corresponding visual signals and a monitor for displaying the video content according to the visual signals to the user. The monitor preferably makes part of the second processing system, e.g. an end user device, and can be e.g. a computer monitor, a TV-set, a display of a smart phone or of a tablet computer.

The second processing system for executing the second part of the method according to claim 1 receives the broadcast signal to be displayed to the user. Of course, the received broadcast signal must have been previously analysed during the first part of the method according to claim 1 and timestamps for this broadcast signal must have been stored in the first database. The broadcast signal may be received by appropriate reception means via a Satellite (e.g. DVB-S), a cable (DVB-C) or a terrestrial antenna (DVB-T). Alternatively, the broadcast signal may be downloaded or streamed, e.g. via the Internet, from a second database where it was previously stored as described in detail above. The broadcast signal is received along a timeline. This means that a time counter is set to a predefined initial value, preferably zero, at the beginning of the broadcast signal. As the broadcast signal is received, the time counter increases or decreases and counts the time. A certain time value of the counter is a unique indication of a certain position within the content of the broadcast signal.

The content of the received broadcast signal is displayed to the user on a video and/or audio output device. Displaying the content may be effected in real-time. In the realm of the present description real-time means that the broadcast signal is displayed almost simultaneously to its reception. Preferably, receiving the broadcast signal, in particular loading the broadcast signal from the second database, and displaying the content of the broadcast signal to a user is part of a streaming process. Displaying of the broadcast signal is almost simultaneously because the streaming process may use a storage buffer for storing small parts of the broadcast signal in order to compensate for variations in the transmission rate of the data transmission during reception of the broadcast signal, and storing part of the received broadcast signal in a buffer storage may result in a short time delay up to a few seconds. The transmission rate may in particular vary considerably if the broadcast signal is streamed from the second database via the Internet.

Furthermore, the second processing system for executing the second part of the method according to claim 1 compares in real-time a current time on the timeline with the timestamps previously stored in the first database and representative of a beginning of the previously detected segments of the broadcast signal having a predefined content. In the realm of the present description comparing the current time with the stored timestamps in real-time means that they are compared almost simultaneously with receiving the broadcast signal. Comparing is almost simultaneously because the step of comparing needs a certain amount of processing time which inevitably leads to a short time delay. Furthermore, receiving the broadcast signal may comprise buffering part of the received broadcast signal in a buffer for compensating any variations in the transmission rate. This may add an additional time delay.

If the current time along the timeline corresponds to a stored timestamp representative of the beginning of a segment of the broadcast signal, the processing system skips the segment during display of the content of the broadcast signal by setting the current time along the timeline to the corresponding timestamp representative of the end of the detected segment. This is repeated until either the end of the broadcast signal is reached or the user actively stops the display of the content of the broadcast signal, e.g. by entering an appropriate command by means of an I/O-device of the second processing system or by simply turning off the processing system.

The second processing system for executing the second part of the method according to claim 1 is preferably a set-top box associated with or making integral part of the video and/or audio output device. The processing system is preferably connected and has access to the first database where the timestamps for the received broadcast signal are stored, e.g. via the Internet. Furthermore, the processing system is connected to or comprises appropriate reception means (e.g. a satellite TV (DVB-S) receiver, a cable TV (DVB-C) receiver or a terrestrial (DVB-T) receiver). Alternatively, the broadcast signal could also be received via the Internet from the second database, where it was previously stored. In that case the processing system would have to be connected and have access to the second database, e.g. via the Internet. Finally, the processing system is connected to an output device for displaying the received and processed broadcast signal (audio and/or video) without the segments having the predefined content.

The second part of the method according to claim 1 is preferably realized by means of an appropriate computer program which can be executed on a processor of the processing system. A conventional set-top box for use in connection with TV-sets for home entertainment may already be connected to the Internet and to an output device (the TV-set). An advantage of the present invention is in particular the fact that the invention can be realized by simply functionally enhancing existing set-top boxes by means of a software update. To this end, a computer program programmed for executing the method according to claim 11 can simply be stored in a storage media (e.g. a flash memory) of the set-top box and the formerly conventional set-top box would become a processing system according to the present invention.

The first part of the method according to claim 1 is preferably executed by a provider of the broadcast signal (e.g. a television or radio station) or by a third party entity operating an online video recorder for storing selected TV-programs in a storage device or the Cloud (e.g. save.TV). The person or company realizing the first part of the method according to claim 1 and the method according to claim 9 may offer the service of permitting its clients to access the first database with the timestamps of segments having a predefined content stored therein for certain video and/or audio broadcast signals. For example, the user of a set-top box corresponding to the second processing system for executing the second part of the method according to claim 1 could be subscribed to the service offered by the third party entity so his set-top box has access to the first database and can realize the second part of the method according to claim 1.

Further features and advantages of the present invention will become apparent from the drawings taken together with the following description. In particular, the figures show:
- Figure 1: a functional diagram showing a first embodiment of the present invention,
- Figure 2: a functional diagram showing a second embodiment of the present invention,
- Figure 3: a functional diagram showing a third embodiment of the present invention,

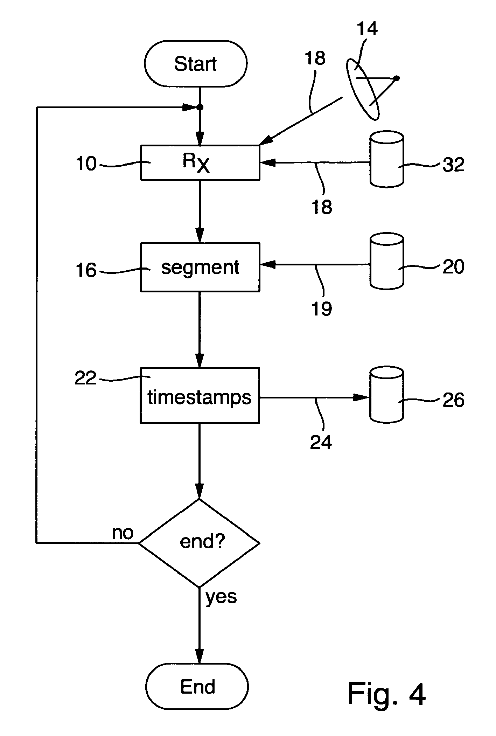

- Figure 4: a flowchart of the first part of the method for storing timestamps in a first database, and
- Figure 5: a flowchart of the first part of the method for displaying the content of a broadcast signal to a user.

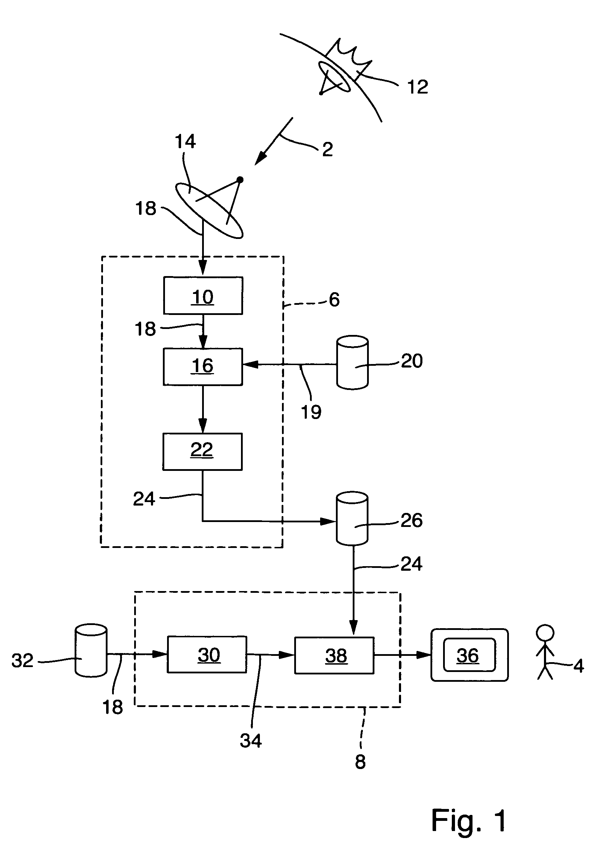

A functional diagram of a method for displaying the content of a video or audio broadcast signal 2 to a user 4 according to a first embodiment of the present invention is shown in figure 1. The method comprises two separate subsequently executed parts. A first part is executed in a first processing system 6 and a second part is executed in a second processing system 8. Of course, it is possible that the processing systems 6, 8 are realized as a single integral processing system.

The first part of the method serves for processing and analysing the received broadcast signal 18 in order to determine segments of the broadcast signal 18 having a predefined content and is executed before actually displaying the content of the broadcast signal 2 to the user 4, which is what is effected during execution of the second part of the method. The first part of the method comprises in functional block 10 the step of receiving the broadcast signal 2 along a timeline. In the embodiment shown in figure 1 the broadcast signal 2 is received from a satellite 12. To this end a receiving device assigned to the first processing system 6 comprises a satellite antenna 14. Receiving the broadcast signal 2 along a timeline means that a time counter in the processing system 6 is set to a predefined starting value, e.g. zero, at the beginning of the received broadcast signal 18 and continues to count up or down as receiving of the broadcast signal 18 goes along. A certain time value of the counter corresponds to a unique point in time in the received broadcast signal 18.

In a further functional block 16 the received broadcast signal 18 is processed. The step of processing comprises detecting a beginning and an end of segments of the broadcast signal 18 having a predefined content. In particular the to be detected segments can comprise an advertising content, a sexually explicit content, a violent content, any officially indexed content and/or any content deemed to be offensive for reasons of race and/or religion. Further, the processing comprises generating timestamps representative of the time on the timeline at the beginning and the end of the detected segments of the broadcast signal 18.

The segments can be detected in many different ways. One possibility is the so-called fingerprint analysis, which comprises the following steps:
- comparing a video or an audio fingerprint of at least part of the received broadcast signal 18 with video or audio fingerprints 19 of segments of other video or audio signals having predefined contents, the fingerprints 19 of the segments of the other video or audio signals having previously been stored in a third database 20, and
- upon detection of a match of the fingerprint of the received broadcast signal 18 with one of the stored fingerprints 19 of the segments of the other video or audio signals, determining the time along the timeline of the beginning of the match as the beginning of the detected segment of the received broadcast signal 18 and the time along the timeline of the end of the match as the end of the detected segment of the received broadcast signal 18.

Many other ways for detecting the segments are possible. These alternative ways for detecting the segments are particularly interesting for a broadcast signal 18 in the form of the transmission of a sporting event (e.g. a soccer game or a car race, e.g. Formula 1 or Nascar). The segments could be detected manually by a human being. In that case a human being watches the broadcast signal and manually defines the beginning and the end of segments having a certain type of content. Alternatively, the noise level of an audience or crowd making part of the broadcast signal can be analysed in order to determine the segments. An increasing noise level may be considered indicative of a particularly interesting scene in the content of the broadcast signal (e.g. a goal, a foul, a penalty in a soccer game or an overtaking manoeuvre, an accident or the finish in a car race). Furthermore, the voice of a moderator or reporter could be analysed in order to determine the segments. Further, the replay of a certain scene (e.g. in slow motion) during a sporting event or the like could be detected in order to determine a certain segment of the broadcast signal 18. Hence, the detected segments of the broadcast signal 18 could indicate the beginning and the end of a particularly interesting part of the broadcast signal 18. Conversely, the segments could also indicate the beginning and the end of a particularly boring part of the broadcast signal 18, e.g. ongoing back-and-forth moves during a soccer game without any special highlights (e.g. a goal, a foul, a penalty) or an ongoing car race lap after lap without any special highlights (e.g. an overtaking manoeuvre, an accident or the finish).

Furthermore, in a functional block 22 timestamps 24 representative of the time on the timeline at the detected beginning and end of the segments of the broadcast signal 18 are generated and are stored in a first database 26. The determination of timestamps 24 at the beginning and the end of the detected segments of the broadcast signal 18 having a predefined content is executed for the entire broadcast signal 18. Hence, the first part of the method executed in the first processing system 6 is repeated until the entire broadcast signal 18 has been processed.

At the end of the first part of the method, there are a plurality of timestamps 24 stored in the first database 26. The timestamps 24 are stored in pairs, one indicative of the beginning of a detected segment and the other one indicative of the end of that segment. For each processed broadcast signal (e.g. a movie) a plurality of pairs of timestamps 24 are stored in the first database 26 for the detected segments having a certain content pertaining to a first content type (e.g. advertisement content). A plurality of further pairs of timestamps 24 are stored in the first database 26 for segments of a certain content pertaining to another content type (e.g. sexually explicit scenes). Pairs of timestamps 24 can be stored in the first database 26 for many other segments with different content types, too.

For example, the timestamps 24 unambiguously indicate for a certain movie recently shown on a certain TV-channel at a certain time, that there are four interruptions of the movie for advertisements starting at 4:07, 17:46, 38:17 and 57:02 minutes from the start of the movie and ending at 5:15, 19:01, 41:23 and 59:46 minutes from the start of the movie, respectively. Similarly, other timestamps 24 stored in the first database 26 can indicate that said movie comprises two sexually explicit scenes one starting at 8:34 minutes and ending at 8:57 minutes and the other one starting at 48:12 minutes and ending at 49:03 minutes from the start of the movie.

According to a further example, if the broadcast signal 18 is a sporting event (e.g. a soccer game or a car race, e.g. Formula 1 or Nascar), the timestamps could indicate the beginning and end of a particularly boring part of the broadcast signal 18, e.g. ongoing back-and-forth moves during a soccer game without any special highlights or an ongoing car race lap after lap without any special highlights. By skipping these segments during the subsequent presentation of the content of the broadcast signal 18 to the user 4 (in the second part 8 of the method), only a recapitulation of the highlights of the sporting event could be presented to the user 4. Of course, in this example much larger (longer) segments would be skipped during the presentation of the content of the broadcast signal 18 to the user 4.

The second part of the method is executed in the second processing system 8. The second part serves for actually displaying the content of the previously processed broadcast signal 18 to the user 4 and comprises a step of receiving the broadcast signal 18 along a timeline in functional block 30. In the embodiment of figure 1 the broadcast signal 18 has previously been stored in a second database 32 and is provided to the second processing system 8. In that case receiving the broadcast signal 18 may comprise downloading the entire broadcast signal 18 from the second database 32, e.g. via the Internet, before starting processing and displaying of the broadcast signal 18. Alternatively, receiving the broadcast signal 18 could make part of a streaming process, where only a small part of the broadcast signal 18 is downloaded at a time, possibly stored in a buffer, processed and then displayed to the user 4 almost simultaneously to receiving the signal 18. Storing the broadcast signal 18 in the second database 32 may have been effected previously by the provider of the broadcast signal 2 (e.g. TV-station or radio station) or by any third party entity operating an online video recorder for storing selected TV-programs in a storage device or the Cloud (e.g. http://www.save.tv operated by save.TV Ltd. from Leipzig, Germany). The third party entity may offer for sale or subscription to its clients the service of providing a download or streaming possibility of previously stored TV-programs from the second database 32 to the processing system 8.

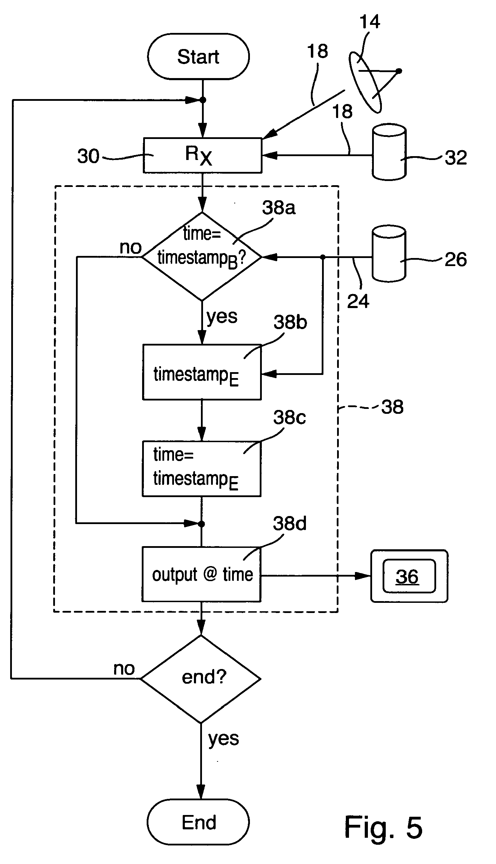

The content of the received broadcast signal 34 is displayed to the user 4 on a video and/or audio output device 36. The output device 36 can make part or simply be assigned to the second processing system 8 and can be a TV-set or a monitor of a computer, a smartphone, a laptop or a tablet computer. In a functional block 38 a current time on the timeline of the received broadcast signal 34 is compared in real-time with the timestamps 24 previously stored in the first database 26. The various processing steps executed in functional block 38 are displayed in more detail in figure 5.

In functional block 38a it is determined whether the current 'time' along the timeline of displaying the content of the broadcast signal 34 to the user 4 corresponds to a 'timestamp_{B}' 24 representative of the beginning of a segment of the broadcast signal 34. If that is the case, in functional block 38b the corresponding 'timestamp_{E}' representative of the corresponding end of the detected segment of the broadcast signal 34 is downloaded from the first database 26. The detected segment is skipped during display of the content of the broadcast signal 34 by setting the current 'time' on the timeline to the corresponding 'timestamp_{E}' 24 representative of the end of that segment, for which the beginning has been detected in functional block 38c. Then, in functional block 38d the output of the received broadcast signal 34 jumps to a point in time corresponding to the end of the detected segment.

Referring to the above example of timestamps 24 stored in the first database 26, regarding segments with an advertisement content, during display of a movie corresponding to the received broadcast signal 34 the start of a first segment having an advertisement content is detected at 4:07 minutes from the start of the movie 34. In that case the display of the movie 34 jumps from 4:07 to 5:15 minutes from the start of the movie 34, corresponding to the end of that segment. Further advertisement content of the movie 34 is detected at 17:46, 38:17 and 57:02 minutes from the start of the movie. After detection of these segments, the display of the movie 34 jumps to 19:01, 41:23 and 59:46 minutes from the start of the movie, respectively. Similarly, the beginning of segments having a sexually explicit content is detected at 8:34 minutes and 48:12 minutes from the start of the movie 34. In these cases display of the movie 34 jumps to 8:57 minutes and 49:03 minutes from the start of the movie 34, respectively.

Referring to the above mentioned further example, during display of a sporting event corresponding to the received broadcast signal 34 the start of a first segment having a boring content without any special highlights is detected. In that case the display of the sporting event 34 jumps from the beginning of the segment ('timestamp_{B}') to the end of that segment ('timestamp_{E}'). Further segments of the sporting event 34 with boring content are detected at other stored timestamps indicative of the beginning of the segments ('timestamp_{B}'). After detection of these segments, the display of the sporting event 34 jumps to the corresponding stored timestamps indicative of the end of these segments ('timestamp_{E}'), respectively. By doing so only a recapitulation of the highlights of the sporting event 34 is presented to the user 4.

The second part of the method executed in the second processing system 8 comes to an end when the end of the broadcast signal 34 has been reached or the user 4 actively stops display of the content of the received broadcast signal 34.

The above embodiments refer to a method where the detected segments are skipped during presentation of the broadcast signal 34 to the user 4. Skipping of the segments means that during presentation of the broadcast signal 34 playback of the broadcast signal's content along the timeline jumps from timestamp_{B} to timestamp_{E} of the respective segments. The broadcast signal 34 itself, for example a corresponding data stream, remains unchanged. Alternatively, instead of skipping the segments, the content of an alternative signal (audio and/or video) could be presented to the user 4 for the duration of the detected segments. The alternative signal could refer to, for example, the latest news, a summary of certain sporting events, documentaries regarding certain topics, other content possibly of interest to the user 4, or simply some advertisement either of general content or dedicated to the user 4.

The first part of the method according to claim 1 and the method according to claim 9, respectively, are executed off-line in the first processing system 6 before actually displaying the content of the broadcast signal 18 to the user 4, which is subsequently effected in the second part of the method according to claim 1 and the method according to claim 11, respectively, by the second processing system 8. The first processing system 6 can comprise an Internet server being connected and having access to at least the first database 26 with the timestamps 24 stored therein and possibly also to the third database 20 with the fingerprints 19 stored therein. The databases 20, 26 can make part of the server, e.g. be realized on a hard disk or a solid state disk of the server, or they can be realized separately from the server, e.g. as external storage devices or as separate Internet servers equipped with or having access to storage devices.

The second part of the method according to claim 1 and the method according to claim 11, respectively, are executed in the second processing system 8 and refer to actually displaying the content of the broadcast signal 18 to the user 4. The processing system 8 can comprise an Internet server being connected and having access to the first database 26 and possibly also to the second database 32. The databases 26, 32 can make part of the server, e.g. be realized on a hard disk or a solid state disk of the server, or they can be realized separately from the server, e.g. as external storage devices or as separate Internet servers equipped with or having access to storage devices.

The second processing system 8 is connected to and has access to the first database 26 with the previously generated timestamps 24 stored therein, and to the second database 32 with the broadcast signal 18 stored therein. Connection to the two databases 26, 32 can be realized via the Internet. The system 8 is further connected to the video and/or audio output device 36 for displaying to the user 4 the content of the received broadcast signal 34.

The second processing system 8 is preferably a set-top box associated with or making integral part of the video and/or audio output device 36. The second part of the method according to claim 1 executed by the second processing system 8 is preferably realized by means of an appropriate computer program which can be executed on a processor of the processing system 8.

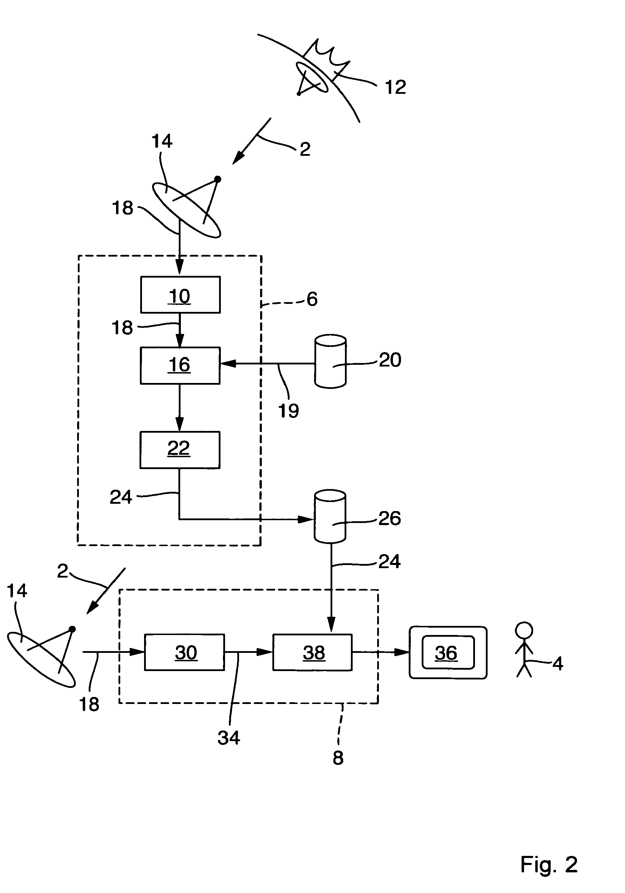

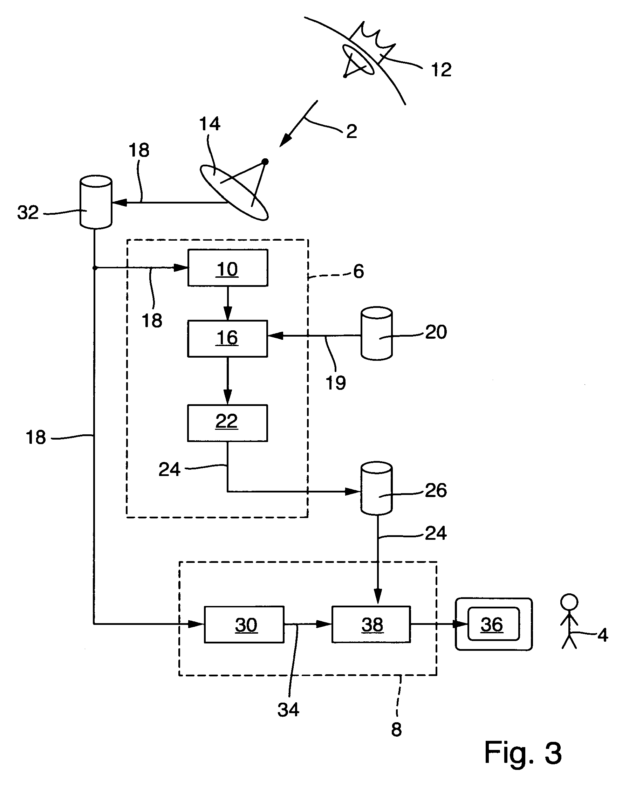

Further embodiments of the present invention are shown in figures 2 and 3. They differ from the first embodiment only in marginal differences, which are explained hereinafter. In the embodiment of figure 2 the second processing system 8 receives the broadcast signal 2 by means of a satellite antenna 40 from a satellite, like satellite 12. Before presenting the content of the broadcast signal 18 to the user 4 on the display 36, the broadcast signal 18 may be stored in a database (not shown) or the like. This could make part of the step of receiving the broadcast signal 18 along a timeline in functional block 30. In this case the content of the received broadcast signal 34 would be presented to the user 4 in a time-delayed manner so that a detected segment corresponding to part of the content of the broadcast signal 34 between the detected beginning of the segment ('timestamp_{B}') and the detected end of the segment ('timestamp_{E}') can be skipped during the presentation of the content of the output signal 34 to the user 4 in functional block 38d without interrupting the presentation of the broadcast signal 34. Hence, considering that the detected segments may last for several minutes each, the database for storing the broadcast signal 18 should have a size large enough for storing at least several minutes, preferably up to an hour, of the broadcast signal 18, in order to provide for a continuous presentation of the broadcast signal 34 without the detected segments to the user 4.

Alternatively, instead of skipping the detected segments when presenting the broadcast signal 34 to the user 4, during the detected segments the content of an alternative signal (audio and/or video) could be presented to the user 4. In that case the broadcast signal 18 would not have to be stored in a data base or the like.

In the embodiment of figure 3 the video or audio broadcast signal 2 is received by means of a satellite antenna 14 and stored in the second database 32 prior to the execution of the first part of the method in processing system 6 and prior to the execution of the second part of the method in processing system 8. Storing the broadcast signal 2 in the second database 32 may be accomplished by the provider of the broadcast signal (e.g. a TV-station or a radio station) or by any third party entity operating an online video recorder for storing selected TV-programs in a storage device or the Cloud (e.g. http://www.save.tv operated by save.TV Ltd. from Leipzig, Germany). The first processing system 6 as well as the second processing system 8 both receive the broadcast signal 18 from the database 32 by downloading or streaming the signal 18.

## Claims

1. Method for displaying the content of a video or audio broadcast signal (18) to a user (4), the method comprising two subsequently executed parts:
- a first part executed in a first processing system (6) before actually displaying the content of the broadcast signal (18) to the user (4), the first part comprising the steps of:
- receiving (10) the broadcast signal (18) along a timeline,
- processing (16) the received broadcast signal, comprising detecting a beginning and an end of segments of the broadcast signal (18) having a predefined content, and
- storing (22) timestamps (24) in a first database (26) representative of the time on the timeline at the detected beginning ('timestamp_{B}') and end ('timestamp_{E}') of the segments of the broadcast signal (18), and
- a second part executed in a second processing system (8) for actually displaying the content of the previously processed broadcast signal (18) to the user (4), the second part comprising the steps of:
- receiving (30) said broadcast signal (18) along a timeline,
- displaying (38d) to a user (4) the content of the received broadcast signal (18) on a video and/or audio output device (36),
- comparing (38) in real-time a current time ('time') on the timeline with the timestamps (24) previously stored in the first database (26), and when the current time ('time') corresponds to a timestamp (24; 'timestamp_{B}') representative of the beginning of a segment of the broadcast signal (18), skipping the segment during display of the content of the received broadcast signal (18) by setting (38c) the current time ('time') on the timeline to the corresponding timestamp (24; 'timestamp_{E}') representative of the end of said segment or alternatively displaying an alternative audio and/or video content to the user (4) for the duration of the segment, the alternative audio and/or video content differing from the content of the broadcast signal (18) during the segment, and
- repeating the previous step until the end of the received broadcast signal (18) has been reached or the user (4) stops display of the content of the received broadcast signal (18).

2. Method according to claim 1, wherein the broadcast signal (18) is stored in a second database (32) prior to the execution of the first part of the method, and receiving (10) the broadcast signal (18) in the first part of the method comprises loading the previously stored broadcast signal (18) from the second database (32).

3. Method according to claim 1 or 2, wherein the broadcast signal is stored in a second database (32) prior to the execution of the second part of the method, and receiving (30) the broadcast signal (18) in the second part of the method comprises loading the previously stored broadcast signal (18) from the second database (32).

4. Method according to one of the preceding claims, wherein the received broadcast signal (18) is processed (16) in the first part of the method in real-time, that is almost simultaneously with receiving (10) the broadcast signal (18).

5. Method according to one of the preceding claims, wherein the current time ('time') on the timeline is compared (38) with the timestamps (24) stored in the first database (26) in real-time in the second part of the method, that is almost simultaneously with receiving (30) the broadcast signal (18).

6. Method according to claim 3, wherein loading the broadcast signal (18) from the second database (32) and displaying the content of the broadcast signal (18) to the user (4) is part of a streaming process.

7. Method according to one of the preceding claims, wherein the step of detecting (16) the beginning and the end of segments of the broadcast signal (18) comprises the steps of
- comparing a video or an audio fingerprint of at least part of the processed broadcast signal (18) with video or audio fingerprints (19) of segments of other video or audio signals having predefined contents, the fingerprints (19) of the segments of the other video or audio signals having previously been stored in a third database (20), and
- upon detection of a match of the fingerprint of the processed broadcast signal (18) with one of the stored fingerprints (19) of the segments of the other video or audio signals, determining the time along the timeline of the beginning of the match as the beginning ('timestamp_{B}') of the detected segment of the processed broadcast signal (18) and the time along the timeline of the end of the match as the end ('timestamp_{E}') of the detected segment of the processed broadcast signal (18).

8. Method according to one of the preceding claims, wherein the predefined content of the segment is at least one of an advertising content, a sexually explicit content, or a violent content.

9. Method according to one of the preceding claims, wherein the alternative audio and/or video content is one of: the latest news, a summary of certain sporting events, a documentary regarding a certain topic, and an advertisement either of general content or dedicated to the user (4).

10. Method for storing timestamps (24) in a first database (26), the method making part of a method according to one of the preceding claims, the method being executed in a first processing system (6) before displaying the content of a broadcast signal (18) to a user (4), the method comprising the steps of:
- receiving (10) the broadcast signal (18) along a timeline,
- processing (16) the received broadcast signal (16), comprising detecting a beginning and an end of segments of the received broadcast signal (18) having a predefined content,
- storing (22) timestamps (24) in the first database (26) representative of the time on the timeline at the detected beginning ('timestamp_{B}') and end ('timestamp_{E}') of the segments of the broadcast signal (18).

11. Method according to claim 10, wherein the step of detecting (16) the beginning and the end of segments of the broadcast signal (18) comprises the steps of
- comparing a video or an audio fingerprint of at least part of the processed broadcast signal (18) with video or audio fingerprints (19) of segments of other video or audio signals having predefined contents, the fingerprints (19) of the segments of the other video or audio signals having previously been stored in a third database (20), and
- upon detection of a match of the fingerprint of the processed broadcast signal (18) with one of the stored fingerprints (19) of the segments of the other video or audio signals, determining the time along the timeline of the beginning of the match as the beginning ('timestamp_{B}') of the detected segment of the processed broadcast signal (18) and the time along the timeline of the end of the match as the end ('timestamp_{E}') of the detected segment of the processed broadcast signal (18).

12. Method for displaying the content of a video or audio broadcast signal (18) to a user (4), the method making part of a method according to one of the claims 1 to 8, the method comprising the steps of:
- receiving (30) the broadcast signal (18) along a timeline,
- displaying (38d) to a user the content of the received broadcast signal (18) on a video and/or audio output device (36),
- comparing (38a) in real-time a current time ('time') on the timeline with the timestamps (24) previously stored in a first database (26), and when the current time ('time') corresponds to a timestamp ('timestamp_{B}') representative of the beginning of a segment of the broadcast signal (18), skipping the segment during display of the content of the broadcast signal (18) by setting (38c) the current time ('time') on the timeline to the corresponding timestamp ('timestamp_{E}') representative of the end of said segment, and
- repeating the previous step until the end of the broadcast signal (18) has been reached or the user (4) stops display of the content of the received broadcast signal (18).

13. Processing system (6) for storing timestamps (24) in a first database (26), the system (6) being connected to
- reception means (14; 32) for receiving a a video or audio broadcast signal (18) along a timeline,
the system (6) further being connected and having access to
- the first database (26),
the processing system (6) being adapted to process (16) the received broadcast signal (18), comprising detecting a beginning and an end of segments of the broadcast signal (18) having a predefined content, and to store timestamps (24) in the first database (26), the timestamps (24) representative of the time on the timeline at the detected beginning ('timestamp_{B}') and end ('timestamp_{E}') of the segments of the broadcast signal (18).

14. Processing system (8) for displaying the content of a video or audio broadcast signal (18) to a user (4), the system (8) being connected to
- reception means (14; 32) for receiving the broadcast signal (18),
the system (8) further being connected and having access to
- a first database (26) with timestamps (24) stored therein, the timestamps (24) representative of a beginning ('timestamp_{B}') and an end ('timestamp_{E}') of previously detected segments of the broadcast signal (18) having a predefined content,
the system (8) further being connected to
- a video and/or audio output device (36) for displaying (38d) to the user (4) the content of the received broadcast signal (18) in real-time,
the processing system (8) being adapted to receive (30) the broadcast signal (18) along a timeline, and to compare (38a) in real-time a current time ('time') on the timeline with the timestamps (24) previously stored in the first database (26) and representative of a beginning ('timestamp_{B}') and an end ('timestamp_{E}') of previously detected segments of the broadcast signal (18) having a predefined content, when the current time ('time') corresponds to a timestamp (24; 'timestamp_{B}') representative of the beginning of a segment of the broadcast signal (18), to skip the segment during display of the content of the broadcast signal (18) by setting (38c) the current time ('time') on the timeline to the corresponding timestamp ('timestamp_{E}') representative of the end of said segment, and to repeat this until the content of the entire broadcast signal (18) has been displayed to the user (4) or the user (4) stops display of the content of the received broadcast signal (18).

15. System (8) according to claim 14, wherein the system (8) is a set-top box associated with or making integral part of the video and/or audio output device.
